**Europäisches Patentamt**

**European Patent Office**

**Office européen des brevets**

(19)

(11) Veröffentlichungsnummer : **0 346 288 B1**

## (12) EUROPÄISCHE PATENTSCHRIFT

(45) Veröffentlichungstag der Patentschrift :
**11.03.92 Patentblatt 92/11**

(51) Int. Cl.[5] : **G01B 11/08**

(21) Anmeldenummer : **89810427.8**

(22) Anmeldetag : **06.06.89**

(54) Verfahren und Einrichtung zum berührungslosen Ausmessen eines Werkstückes.

(30) Priorität : **07.06.88 CH 2165/88**

(43) Veröffentlichungstag der Anmeldung :
**13.12.89 Patentblatt 89/50**

(45) Bekanntmachung des Hinweises auf die
Patenterteilung :
**11.03.92 Patentblatt 92/11**

(84) Benannte Vertragsstaaten :
**CH DE FR GB IT LI**

(56) Entgegenhaltungen :
**EP-A- 0 081 376
DE-A- 3 521 260
DE-A- 3 630 702
FR-A- 2 469 697
US-A- 3 749 500
US-A- 4 657 395
PATENT ABSTRACTS OF JAPAN, Band 11, Nr.
399 (P-651)[2846], 26. Dezember 1987, Seite
118 P 651; & JP-A-62 162 903 (KOBE STEEL
LTD) 18-07-1987
PATENT ABSTRACTS OF JAPAN, Band 11, Nr.
177 (P-583)[2624], 6. Juni 1987, Seite 31 P 583;
& JP-A-62 6114 (MITSUBISHI METAL CORP.)
13-01-1987**

(56) Entgegenhaltungen :
**FEINWERKTECHNIK UND MESSTECHNIK,
Band 90, Nr. 5, Juli-August 1982, Seite 234,
München, DE; "Durchmesserprüfung mit Laser"
PATENT ABSTRACTS OF JAPAN, Band 9, Nr.
120 (P-358)[1843], 24. Mai 1985, Seite 115 P
358; & JP-A-60 6808 (MITSUTOYO SEISAKUS-
HO K.K.) 14-01-1985
PATENT ABSTRACTS OF JAPAN, Band 9, Nr.
141 (P-364)[1864], 15. Juni 1985, Seite 122 P
364; & JP-A-60 21 408 (TOKYO GAS K.K.) 02-
02-1985**

(73) Patentinhaber : **Horak, Gottlieb
Kirchstutz 1
CH-3414 Oberburg (CH)**

(72) Erfinder : **Bürki, Andreas
Niesenweg 5
CH-3422 Kirchberg (CH)**
Erfinder : **Horak, Gottlieb
Kirchstutz 1
CH-3414 Oberburg (CH)**

(74) Vertreter : **Schweizer, Hans
Bovard AG Patentanwälte VSP
Optingenstrasse 16
CH-3000 Bern 25 (CH)**

EP 0 346 288 B1

## Beschreibung

Die Erfindung betrifft ein Verfahren nach dem Oberbegriff des Patentanspruches 1 und eine Einrichtung gemäss dem Oberbegriff des Patentanspruches 5.

Das genaue Ausmessen von Werkstücken, beispielsweise von spanabhebenden Werkzeugen, wurde bisher durch qualifiziertes Bedienungspersonal manuell Stück für Stück vorgenommen oder es wurden hochpräzise, langsam arbeitende und teure Messmaschinen eingesetzt.

In jüngster Zeit sind auch automatisierte Messverfahren und Vorrichtungen zum berührungslosen Ausmessen von Werkstücken bekanntgeworden. In der deutschen Offenlegungsschrift DE-A-3 630 702 ist eine Vorrichtung zum Vermessen eines Werkstückes beschrieben. Das Werkstück ist auf einem Schlitten mittels zwei Reitstöcken aufspannbar, wobei alle wesentlichen Kanten des Werkstückes freiliegen. Eine Strahlenquelle erzeugt ein streifenförmiges Laserstrahlenbündel mit parallelen Strahlen. Der Strahlenquelle gegenüberliegend ist ein Detektor angeordnet. Weiter ist eine einen Computer aufweisende Auswerteelektronik zum Steuern von Motoren, welche den Schlitten in der X-Richtung bzw. den Detektor in der Y-Richtung bewegen, vorhanden. Das Werkstück ist so positioniert, dass seine Drehachse senkrecht zum streifenförmigen Strahlenbündel gerichtet ist, wobei durch das Werkstück ein Teil des Strahlenbündels abgedeckt, d.h. vom Detektor ferngehalten wird. Mit dieser Vorrichtung lassen sich wohl Durchmesser eines Werkstückes bestimmen. Die Berechnung des Mittelpunktes des Durchmessers, d.h. die Berechnung der Exzentrizität oder die Berechnung der Abweichung der Mittellinie des Werkstückes von der effektiven Drehachse desselben sind jedoch nicht vorgesehen.

Die deutsche Offenlegungsschrift DE 3 521 260 nimmt Bezug auf ein Verfahren und eine Vorrichtung zum Ermitteln der Abmessungen eines länglichen Prüfobjektes, insbesondere zum Ermitteln des Durchmessers von Wellen. Diese bekannte Messvorrichtung weist einen Messtisch auf, auf dem ein Spindelstock und ein Reitstock zum Aufnehmen eines Prüfobjektes angeordnet sind. Längs Führungsschienen ist ein Messwagen verschiebbar. Der Messwagen umgreift das Prüfobjekt vollständig. Oberhalb des Messobjektes ist eine zwei Fotodiodenstreifen aufweisende Querstrebe am Messwagen angeordnet. Die Fotodiodenzeilen verlaufen senkrecht zur Längsachse des Prüfobjektes, d.h. sie liegen in der Messebene. Jede Fotodiodenzeile ist in einer Kamera mit entsprechender Optik eingebaut. Die Fotodiodenzeilen sowie die Beleuchtungsquellen sind bezüglich des jeweiligen Prüfobjekts so positioniert, dass zwei diametral gegenüberliegende Konturpunkte auf den Fotodiodenzeilen abgebildet werden. Weil von zwei einander gegenüberliegenden Konturpunkten je einer auf einer der beiden Fotodiodenzeilen abgebildet sein muss, können nur Durchmesser und die Rundheit des Prüfobjektes ermittelt werden.

In der europäischen Patentanmeldung mit der Veröffentlichungsnummer EP 0 081 376 ist ein Verfahren offenbart, mit dem bestimmt werden kann, ob ein komplexer herzustellender Bauteil, insbesondere eine Kurbelwelle, innerhalb der Mantelfläche eines Rohlings angeordnet werden kann. Mit dem Verfahren, bei dem die Mantelfläche des Rohlings mittels eines Laserstrahls dreidimensional abgetastet wird, wird mit einem Computer die beste Lage des herzustellenden Bauteiles innerhalb des Rohlings auch inbezug auf möglichst kleine Unwuchten beim Bearbeiten des letzteren berechnet. Der Rohling wird dann zum Bearbeiten entsprechend der berechneten Drehachse eingespannt.

Es ist die Aufgabe der Erfindung, ein Verfahren und eine Einrichtung zu schaffen, welche auch dem nicht qualifizierten Bedienungspersonal oder einem Roboter gestatten, in kurzer Zeit die Abmessungen eines fertig hergestellten Werkstückes mit hoher Präzision so festzustellen, dass daraus maximale Abweichungen von Durchmessersollwerten und das effektive Zentrum des Werkstückes sowie seine Abweichung gegenüber der Drehachse als Exzentrizität bestimmbar sind.

Das erfindungsgemässe Verfahren ist durch die Merkmale des Patentanspruches 1 definiert.

Die erfindungsgemässe Einrichtung ist durch die im Patentanspruch 5 angeführten Merkmale gekennzeichnet.

Die Erfindung ist nachstehend mit Bezugnahme auf die Zeichnung beispielsweise näher erläutert. Es zeigen

Fig. 1 eine Ausführungsform der erfindungsgemässen Einrichtung in perspektivischer Darstellung,

Fig. 2 einen einen Spindelstock tragenden Kreuzschlitten in der Seitenansicht,

Fig. 3 die Draufsicht auf den Kreuzschlitten gemäss der Fig. 2,

Fig. 4 den Spindelstock der Einrichtung gemäss der Fig. 1, teilweise im Schnitt,

Fig. 5 ein Blockschema der Einrichtung gemäss der Fig. 1 und

Fig. 6 die Draufsicht auf eine Bedienungsfeld-Konsole.

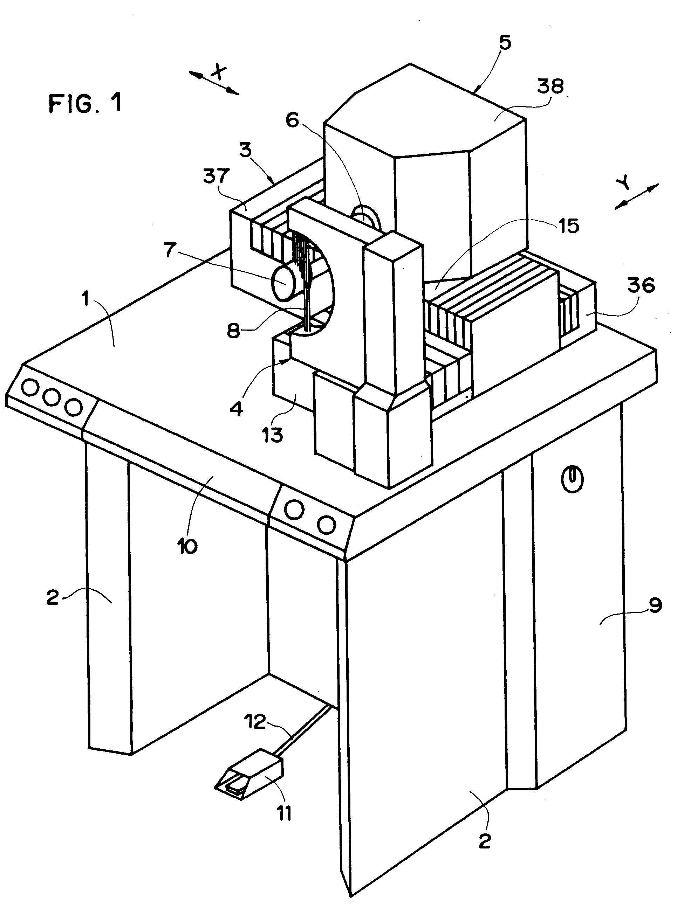

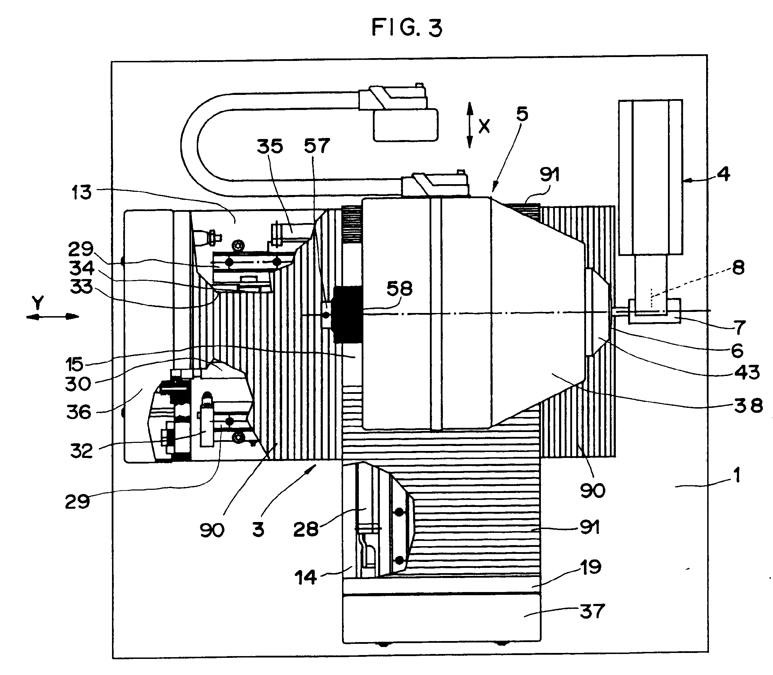

Die Fig. 1 zeigt ein Ausführungsbeispiel der erfindungsgemässen Einrichtung zum berührungslosen Ausmessen eines Werkstückes, insbesondere von Fräsern, Bohrern oder Reibahlen. Eine Tischplatte 1 ruht auf Stützen 2. Auf der Tischplatte 1 ist ein Kreuzschlitten 3 und eine Laser-Lichtschranke 4 angeordnet. Auf dem Kreuzschlitten 3 ist ein Spindelstock 5 mit einer Spannzange 6 befestigt. In die Spannzange 6 ist ein Fräswerkzeug 7 eingespannt, welches sich zum Ausmessen im Bereich des Laserstrahls 8 der Lichtschranke 4 befindet.

Unter der Tischplatte 1 und hinter den Stützen 2 befindet sich ein Schrank 9, in welchem ein in der Fig. 1 nicht sichtbarer Prozessor und eine ebenfalls nicht sichtbare Luftdruckquelle untergebracht sind. Auf der Frontseite der Tischplatte 1 ist in einem ausziehbaren Einschub 10 eine Bedienungsfeld-Konsole angeordnet. Zwischen den Stützen 2 befindet sich ein Fussschalter 11, der über ein Kabel 12 an den nicht sichtbaren Prozessor angeschlossen ist. Der Kreuzschlitten 3 ermöglicht, dass der Spindelstock längs den beiden mit X und Y bezeichneten Achsen verschiebbar ist.

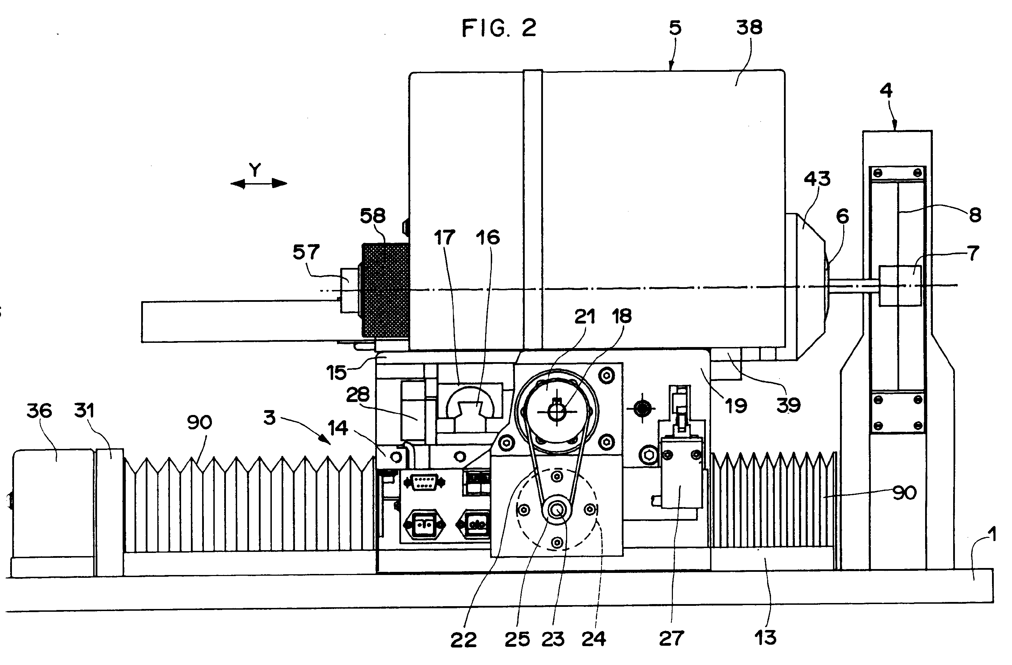

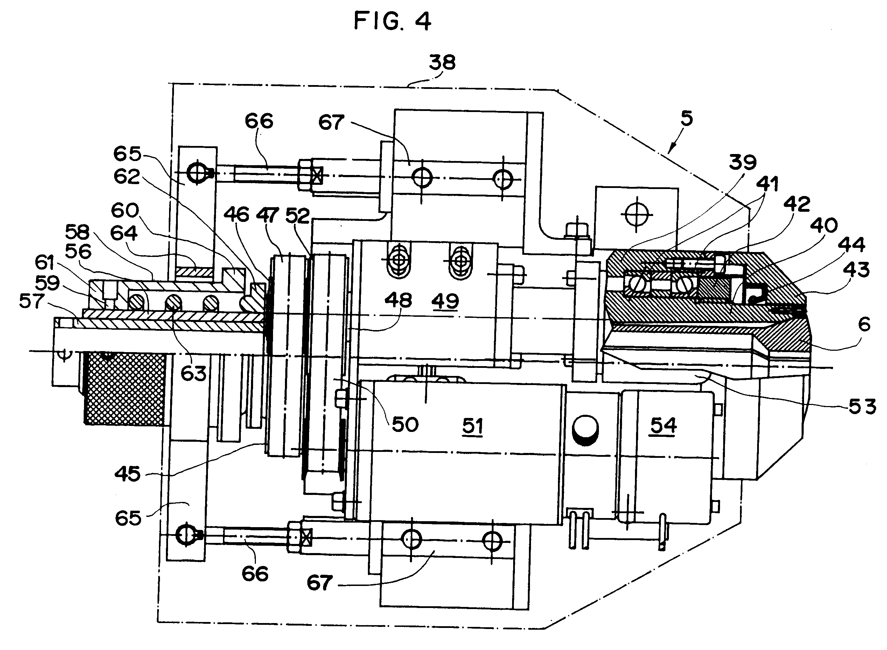

In der Fig. 2 ist eine Ansicht des Kreuzschlittens 3, des Spindelstockes 5 und der Laser-Lichtschranke 4, von der Frontseite der Tischplatte 1 her gesehen, dargestellt und die Fig. 3 zeigt die Draufsicht auf die in der Fig. 2 dargestellten Komponenten der Einrichtung, welche in einem kleineren Massstab gezeichnet sind.

Der Kreuzschlitten 3 besitzt eine untere Grundplatte 13, die starr auf der Tischplatte 1 befestigt ist, eine längs der Y-Achse verschiebbare Zwischenplatte 14 und eine obere Grundplatte 15, auf welcher der Spindelstock 5 befestigt ist.

Auf der Zwischenplatte 14 sind zwei parallel verlaufende Führungsschienen 16 angeordnet, von denen in der Fig. 2 nur je eine sichtbar ist. An der Unterseite der oberen Grundplatte 15 sind vier die Führungsschienen 16 teilweise umfassende Lagerblöcke 17 befestigt. Von diesen Lagerblöcken 17 ist in der Fig. 2 nur einer sichtbar. Die obere Grundplatte 15 ist durch die Lagerblöcke 17 längs den Führungsschienen 16, d.h. in der X-Achse, verschiebbar.

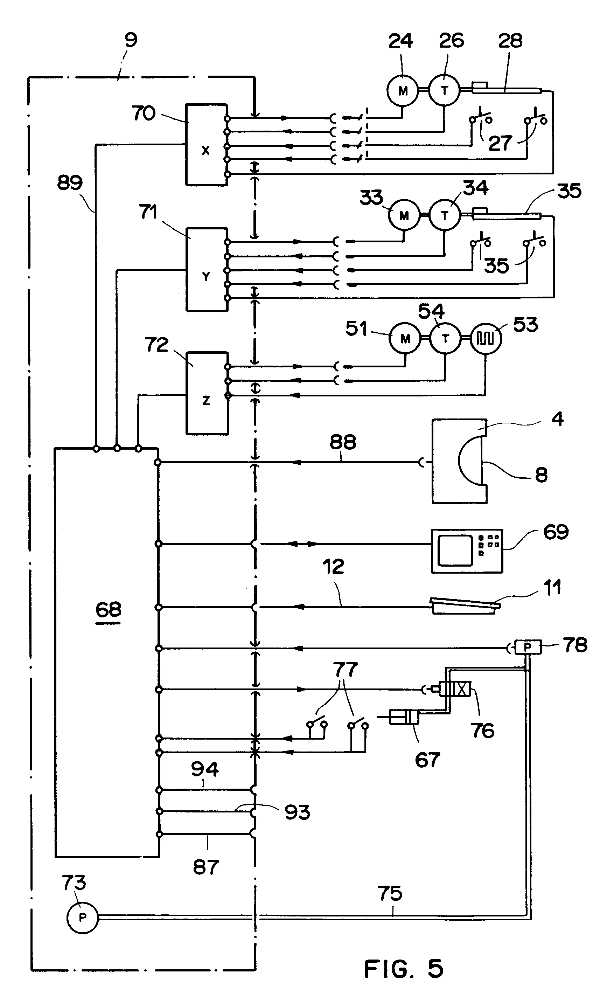

Zwischen den Führungsschienen 16 erstreckt sich parallel dazu eine Gewindespindel 18, von welcher in der Fig. 2 nur die eine Stirnseite sichtbar ist. Die Spindel 18 durchsetzt eine an der Unterseite der oberen Grundplatte 15 befestigte, nicht dargestellte Schraubenmutter, so dass die obere Grundplatte 15 durch das Drehen der Gewindespindel 18 sich längs der Führungsschienen 16 verschiebt. Um eine möglichst genaue und reproduzierbare Verschiebung zu erhalten, wird eine Kugelgewindespindel als Gewindespindel 18 sowie eine dazu passende Mutter verwendet. Die Gewindespindel 18 ist in einer senkrecht zur oberen Grundplatte 15 angeordneten Endplatte 19 gelagert. Das in der Endplatte 19 gelagerte Ende der Gewindespindel 18 ragt über diese hinaus und auf diesen Endbereich ist ein Zahnriemenrad 21 drehfest aufgesetzt. Das Zahnriemenrad 21 ist über einen Zahnriemen 22 mit einem weiteren, auf die Antriebswelle 23 eines Elektromotors 24 aufgesetzten Zahnriemenrad 25 drehverbunden. Auf der Rückseite des Motors 24 ist ein Tachogenerator 26 angeordnet, der nur in der Fig. 5 schematisch dargestellt ist. An beiden Enden der Verschiebestrecke der oberen Grundplatte 15 ist zum Begrenzen der Verschiebestrecke je ein Endschalter 27 angeordnet, von welchen beiden Endschaltern in der Fig. 2 nur einer sichtbar ist und in der Fig. 5 beide schematisch dargestellt sind.

Neben der einen Führungsschiene 16 ist parallel dazu ein Glasmassstab 28 mit einer nicht gezeigten Referenzmarke angeordnet. Als Glasmassstab 28 eignet sich der Glasmassstab vom Typ 9101 der Firma Leine & Linde sehr gut, welcher Glasmassstab eine Gitterkonstante von 20 Mikrometer und eine Auflösung von einem Mikrometer aufweist.

An der an der Tischplatte 1 befestigten unteren Grundplatte 13 sind, ähnlich wie an der Zwischenplatte 14, zwei parallele Führungsschienen 29 befestigt. An der Unterseite der Zwischenplatte 14 sind, ähnlich wie an der oberen Grundplatte 15, nicht sichtbare Lagerblöcke befestigt, so dass die Zwischenplatte 14 längs den Führungsschienen 29, d.h. längs der Y-Achse, verschiebbar ist. Zwischen den Führungsschienen 29 ist parallel dazu eine in der Fig. 3 nur teilweise sichtbare Gewindespindel 30 angeordnet, die mit einer nicht sichtbaren, an der Unterseite der Zwischenplatte 14 befestigten Schraubenmutter zusammenarbeitet, um die Zwischenplatte 14 längs den Führungsschienen 29 zu bewegen.

Die Gewindespindel 30 ist in einer an einer Stirnseite der unteren Grundplatte 13 angeordneten Endplatte 31 gelagert. Auf das über die Endplatte 29 vorstehende Ende der Gewindespindel 30 ist ein nicht sichtbares Zahnriemenrad drehfest aufgesetzt. Das genannte Zahnriemenrad wird über einen nicht sichtbaren Zahnriemen durch einen Elektromotor 33 angetrieben, von dem in der Fig. 3 nur ein Teil sichtbar ist. Auf der Rückseite des Elektromotors 33 ist ein Tachogenerator 34 angebaut. Während die Antriebswelle des Elektromotors 24 unterhalb der Gewindespindel 18 angeordnet ist, ist die nicht dargestellte Antriebswelle des Elektromotors 33 zum Verringern der Bauhöhe in horizontaler Richtung neben der Gewindespindel 30 angebracht.

Parallel zu der einen Führungsschiene 29 ist ein Glasmassstab 35 mit einer nicht sichtbaren Referenzmarke auf der unteren Grundplatte 13 angeordnet. Der Glasmassstab 35 ist gleich aufgebaut wie der Glasmassstab 28. An jedem Ende der Verschiebestrecke befindet sich je ein Endschalter 32 zum Begrenzen des Verschiebeweges längs der Y-Achse.

Die an der Aussenseite der Endplatte 31 montierten Komponenten sind durch eine Abdeckhaube 36 geschützt. Die an der Aussenseite der Endplatte 19 montierten Komponenten sind durch eine Abdeckhaube 37 geschützt. In der Fig. 2 ist die Abdeckhaube 37 von der Endplatte 19 abgenommen. Die beidseits über die Zwischenplatte 14 vorstehenden Führungsschienen 29 und die Gewindespindel 30 sind mittels darüber angeordneten Faltenbalgen 90 und die über die obere Grundplatte 15 vorstehenden Teile der Führungsschienen 16 und der Gewindespindel 18 durch darüber angeordnete Faltenbalgen 91 geschützt.

Die Fig. 4 zeigt die Draufsicht auf den Spindelstock 5, der an der in dieser Figur nicht dargestellten oberen Grundplatte 15 befestigt ist. Von der den Spindelstock 5 schützenden Haube 38 ist der besseren Uebersicht wegen nur der Umriss mit strichpunktierten Linien angedeutet. In einem Spindelgehäuse 39 ist eine Spindelwelle 40 mit einem vorderen Doppellager 41 und einem nicht sichtbaren hinteren Lager gelagert. Das Doppellager 41 umfasst zwei in O-Anordnung eingebaute Spindellager, die über eine Spannmutter 42 vorgespannt sind, so dass die Spindelwelle 40 kein achsiales Spiel aufweist. Ein mit dem Spindelgehäuse 39 starr verbundener Schutzring 43 trägt einen Dichtungsring 44, der das Eindringen von Schmutz aus der Umgebung in die Lager 41 verhindert.

Auf dem hinteren, aus dem Spindelgehäuse 39 herausragenden Ende der Spindelwelle 40 ist ein Zahnriemenrad 45 aufgesetzt, das mit einem um ein angetriebenes Zahnriemenrad 46 gelegten Zahnriemen 47 kämmt. Das antreibende Zahnriemenrad 46 ist drehfest auf eine Welle 48 aufgesetzt, die in einem am Spindelgehäuse 39 angeschraubten Lager 49 drehbar angeordnet ist. Benachbart zum antreibenden Zahnriemenrad 46 ist ein über einen Zahnriemen 50 durch einen Elektromotor 51 angetriebenes Zahnriemenrad 52 auf die Welle 48 drehfest aufgesetzt. Die beiden auf die Welle 48 aufgesetzten Zahnriemenräder 46 und 52 bilden mit dem Lager 49 ein Zwischengelege, durch welches die Drehzahl der Spindelwelle 40 gegenüber der Drehzahl der Antriebswelle des Elektromotors 51 im Verhältnis von 1 : 9 herabgesetzt wird. Am anderen Ende der Welle 48 ist ein nur teilweise dargestellter Drehgeber 53 zum genauen Erfassen der Drehwinkelstellung der Spindelwelle 40 angeordnet. Als Drehgeber 53 wird vorzugsweise der durch die Firma Leine & Linde hergestellte Drehgeber, Modell 63, verwendet, welcher pro Umdrehung 300 Impulse abgibt und zusätzlich eine Referenzmarke erzeugt. Auf der Rückseite des Elektromotors 51 ist weiter ein Tachogenerator 54 angeordnet.

In die frontseitige Oeffnung der hohlen Spindelwelle 40 ist eine Spannzange 6 zum Halten des auszumessenden, in der Fig. 4 nicht gezeichneten Fräswerkzeuges 7 eingesetzt. Der innere Endbereich der Spannzange 6 ist auf nicht sichtbare Art mit einer Zugspindel 56 verschraubt, deren eine Endbereich über die Spindelwelle 40 nach hinten hinausragt. In die Zugspindel 56 ist ein als Anschlag für die hintere Stirnseite der Spannzange 6 dienendes Rohrstück 57 eingeschraubt und kann zum Einstellen der Spannkraft relativ gegenüber der Zugspindel 56 in achsialer Richtung verstellt werden. Auf den über das Spindelgehäuse 39 hinausragenden Teil der Zugspindel 56 ist eine Zughülse 58 aufgesetzt. Die Zughülse 58 weist an ihrem einen Ende eine radial nach innen abstehende Rippe 59 und am anderen Ende einen radial nach aussen abstehenden Kragen 60 auf. Radial durch die Zughülse 58 und die Rippe 59 erstreckt sich eine Bohrung mit einem Innengewinde, in das zum drehfesten Verbinden der Zughülse mit der Zugspindel 56 eine Befestigungsschraube 61 eingeschraubt ist. Auf die Zugspindel 56 ist ein Ring 62 aufgeschoben, der an der hinteren Stirnseite der Spindelwelle 40 anliegt. Zwischen der Rippe 59 und dem Ring 62 ist eine Druckfeder 63 angeordnet, welche über die Zughülse 58 eine bezogen auf die Fig. 4 nach links gerichtete Kraft auf die Zugspindel 56 ausübt und dadurch die Spannzange 6 in die Spindelwelle 40 hineinzieht. Ein weiterer Ring 64 umgibt lose die Zughülse 58 und weist zwei gegenüberliegende, radial verlaufende Lappen 65 auf. Das äussere Ende jedes Lappens 65 ist mit je einer Schubstange 66 eines pneumatisch betätigbaren Kurzhub-Zylinders 67 verbunden. Jeder der Kurzhub-Zylinder 67 ist auf der Aussenseite des Spindelgehäuses 39 befestigt. Beim Betätigen der Kurzhub-Zylinder 67 wird der Ring 64, bezogen auf die Fig. 4 nach rechts bewegt. Dabei stösst der Ring 64 an den Kragen 60 der Zughülse an und bewegt dieselbe ebenfalls entgegen der Rückführkraft der Druckfeder 63 nach rechts. Diese Bewegung wird durch die Zugspindel 56 auf die Spannzange 6 übertragen, so dass das zuvor gehaltene Fräswerkzeug 7 aus der Spannzange 6 herausgezogen werden kann.

Die oben beschriebene Einrichtung wird durch einen in der Fig. 5 dargestellten Prozessor 68 gesteuert, welcher die Befehle von einer Bedienungskonsole 69 empfängt und die gemessenen Werte zum Anzeigen derselben an die Bedienungskonsole 69 liefert. Der Prozessor 68 ist zusammen mit drei Steuerstromkreisen 70, 71 und 72 und einer Druckluftquelle 73 im Schrank 9 untergebracht. Die Druckluft wird zum Betätigen der oben genannten Kurzhub-Zylinder 67 benötigt und wird denselben über eine Leitung 75 und ein Steuerventil 76 zugeführt. Die beiden Endstellungen der Schubstangen 66 wird durch Endschalter 77 und das Vorhandensein von Druckluft durch einen Druckwächter 78 überwacht.

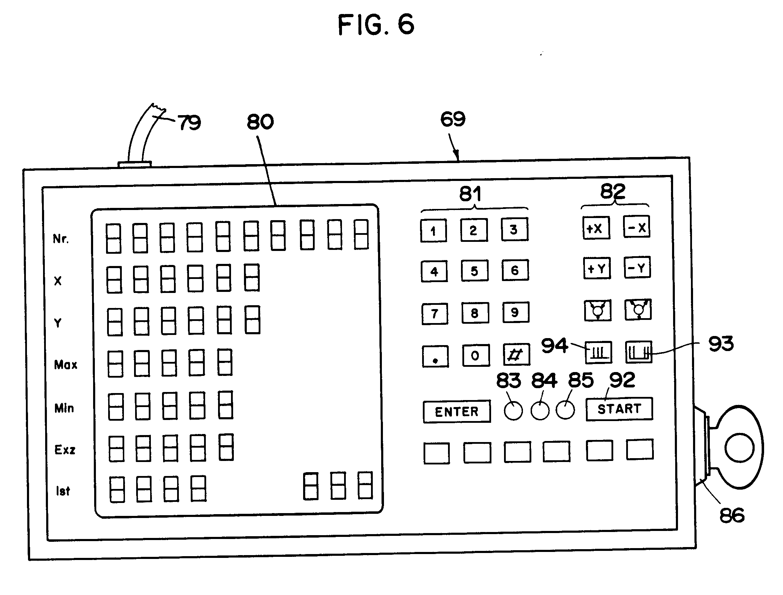

Die in der Fig. 6 dargestellte Bedienungskonsole 69 ist über ein Mehrfachkabel 79 mit dem Prozessor 68 verbunden und umfasst ein Anzeigefeld 80, eine Gruppe von numerischen Tasten 81, eine Gruppe von Funktionstasten 82, drei Anzeigelampen 83, 84 und 85 sowie einen Schlüsselschalter 86, der die drei Stellungen AUS, MAN und AUTO einnehmen kann.

Das Anzeigefeld 80 weist eine erste Zeile Nr. für die Anzeige der Identifizierung der Werkzeug- oder Programmnummer, eine zweite Zeile X für die Anzeige der Position in der X-Achse, eine dritte Zeile Y für die Anzeige der Position in der Y-Achse, eine vierte Zeile Max. für die Anzeige des an der angegebenen Position X und Y maximal zulässigen Durchmessers, eine fünfte Zeile Min. für die Anzeige des an der angegebenen

4

Position X und Y minimal zulässigen Durchmessers, eine sechste Zeile Exz. für die Anzeige der an der angegebenen Position X und Y maximal zulässigen Exzentrizität und eine siebte Zeile Ist für die Anzeige des an der angegebenen Position X und Y gemessenen Durchmessers und der berechneten Exzentrizität auf.

Mit Hilfe der numerischen Tasten 81 können die numerischen Daten, wie die maximal bzw. minimal zulässigen Durchmesser an den betreffenden Positionen, in den Arbeitsspeicher des Prozessors 68 eingegeben werden, wenn die Taste ENTER betätigt wird.

Der Kreuzschlitten 3, die Laser-Lichtschranke 4 und der Spindelstock 5 sind durch einen in keiner der Figuren dargestellten, mit einer Türe versehen Kasten geschützt. Weiter ist eine nicht dargestellte Türbetätigungsvorrichtung vorgesehen, die zum Oeffnen bzw. Schliessen über eine Leitung 87 mit dem Prozessor 68 verbunden ist. Das im Programmspeicher des Prozessors 68 gespeicherte Programm steuert die oben beschriebene Einrichtung derart, dass das in der Spannzange 6 des Spindelstockes 5 eingespannte Fräswerkzeug 7 so positioniert wird, dass sich die Kontur des Fräswerkzeuges 7 im Bereich des streifenförmigen Laserstrahles 8 befindet. Der Laserstrahl 8 verläuft senkrecht zu den Achsen X und Y, längs denen der Spindelstock 5 verschiebbar ist. Die Breite des streifenförmigen Laserstrahls 8 beträgt beispielsweise 2 mm und ist senkrecht zur Drehachse der Spannzange 6 gerichtet. Die durch die Laser-Lichtschranke 4 vom Ausmass der Abdeckung des Laserstrahles 8 durch das Fräswerkzeug 7 abhängigen Signale werden über eine Leitung 88 dem Prozessor 68 zugeführt und von diesem zusammen mit den durch den Steuerstromkreis 70 ermittelten und über die Leitung 89 dem Prozessor 68 zugeführten Werten, verarbeitet. Die verarbeiteten Werte werden in der zweiten Zeile X des Anzeigefeldes 80 angezeigt und in einem nicht dargestellten Messwertspeicher des Prozessors 68 gespeichert.

Während dem Messvorgang wird das Fräswerkzeug 7 durch den Spindelstock 5 um seine Achse um 360° gedreht. Dabei werden sämtliche auftretende Höchstwerte, wie Radius und Winkelposition beispielsweise der Werkzeugschneide, erfasst und gespeichert. Aus diesen Polarkoordinatenwerten wird der bestmöglichste Kreis berechnet und dessen Durchmesser und die Position des Zentrums berechnet und gespeichert.

Danach wird das Fräswerkzeug 7 längs der Y-Achse um einen ausgewählten Betrag verschoben und der oben beschriebene Messvorgang wiederholt. Gestützt auf mehrere solcher schichtweise erfolgten Messvorgänge berechnet der Prozessor 68 die Konizität, Exzentrizität und Geradheit, d.h. den "Schlag" oder die Steigung, des Fräswerkzeuges 7. Damit Ungenauigkeiten der Spannzange 6 und/oder der Lagerung der Spindelwelle 40 die Messergebnisse nicht beeinflussen, können diese Ungenauigkeiten mittels einer Eichmessung festgestellt und bei der Berechnung der Messwerte berücksichtigt werden. Nachstehend ist der Ablauf eines Messvorganges beschrieben. Nach dem Betätigen des Schlüsselschalters in die Stellung AUTO werden die Elektromotore 24 und 33 des Kreuzschlittens 4 durch die Steuerstromkreise 70 bzw. 71 so gesteuert, dass sich der Spindelstock 5 bis zu den Referenzmarken der Glasmassstäbe 28 und 35 verschiebt. In dieser Stellung ist das Messobjekt, d.h. das Fräswerkzeug 7, am weitesten vom Laserstrahl 8 entfernt. Wenn diese Stellung erreicht ist, gibt der Prozessor 68 ein Signal auf die Leitung 87, worauf sich die in keiner Figur dargestellte Türe öffnet. Gleichzeitig erscheint auf dem Anzeigefeld der Bedienungskonsole 69 die Nr. des zuletzt eingestellten Programmes und dessen ersten Werten. Wenn beispielsweise der Druckwächter 78 feststellt, dass der Druck der Druckluft einen unteren Wert unterschreitet, oder wenn der Laserstrahl 8 durch eine verschmutzte Optik gestört ist, wird dies bis zur Behebung dieser Mängel in der untersten Zeile Ist angezeigt. Wenn diese Mängel behoben sind, oder nicht vorhanden waren, wird das zu messende Fräswerkzeug 7 in die Spannzange eingesetzt, was von Hand oder durch einen Roboter erfolgen kann. Durch Betätigen der Starttaste 92 oder des Fussschalters 11 wird die Türe geschlossen und der Prozessor 68 veranlasst, dass die Steuerstromkreise 70 und 71 die Elektromotore 24 und 33 des Kreuzschlittens 4 in der Weise erregen, dass das in der Spannzange 6 des Spindelstockes 5 eingespannte Fräswerkzeug 7 die in der Zeile X und der Zeile Y angegebene Position erreicht. Danach beginnt der oben beschriebene Messvorgang.

Der Messvorgang kann jederzeit durch Betätigen einer Funktionstaste 93 zum Oeffnen der Türe unterbrochen und durch Betätigen einer Funktionstaste 94 und der Starttaste 92 wieder aufgenommen werden.

Wenn bei der Messung durch Vergleichen des in Zeile Ist angegebenen Ist-Durchmessers mit dem berechneten Durchmesser sich herausstellt, dass der Ist-Durchmesser grösser ist als der in der Zeile Max. angegebene Wert, so leuchtet die gelbe Anzeigelampe 84 auf. Dies bedeutet, dass das betreffende Fräswerkzeug 7 nochmals nachbearbeitet werden muss. Mit dem gleichen Signal, das die gelbe Anzeigelampe 84 einschaltet, kann ein Entnahmeroboter so gesteuert werden, dass er das betreffende Fräswerkzeug an einer Stelle ablegt, die für die nachzubearbeitenden Fräswerkzeuge vorgesehen ist.

Ergibt der oben erwähnte Vergleich, dass der Ist-Durchmesser zwischen den in den Zeilen Max. und Min. angegebenen Werten liegt und dass die ermittelte Exzentrizität kleiner ist als der in Zeile Exz. angegebene Wert, so leuchtet die grüne Anzeigelampe 83 auf. Dies bedeutet, dass dieses gemessene Fräswerkzeug in Ordnung ist.

Wenn jedoch der oben genannte Vergleich ergibt, dass der Ist-Durchmesser kleiner ist als der in Zeile Min.

EP 0 346 288 B1

angegebene Wert und/oder dass die Exzentrizität grösser ist als der in der Zeile Exz. angegebene Wert, so leuchtet die rote Anzeigelampe 85 auf. Dies bedeutet, dass dieses Fräswerkzeug ausgeschieden werden muss. Gegebenenfalls kann der Entnahmeroboter dann so gesteuert werden, dass er dieses ausgeschiedene Fräswerkzeug an einer Sammelstelle für ausgeschiedene Fräswerkzeuge ablegt.

Bei den oben beschriebenen Verfahren, gemäss welchen die oben beschriebene Einrichtung arbeitet, werden weder das Werkstück noch das dieses abtastende Organ abgenützt, weil keine Berührung stattfindet. Es treten daher keine auf das Werkstück einwirkenden und Messresultate verfälschenden Kräfte auf.

Die pro Messobjekt gespeicherten Werte können über eine Datentransferstelle 93 des Prozessors 68 entnommen und ausgedruckt werden, so dass für jedes gemessene Objekt ein Zertifikat erhalten wird. Ueber eine Leitung 94 können die Steuersignale für die oben erwähnten, nicht dargestellten Roboter entnommen werden.


## Patentansprüche

1. Verfahren zum berührungslosen Ausmessen eines Werkstückes mittels eines streifenförmigen Laserstrahls und eines Spindelstockes, welcher axial zur Spindelstockdrehachse, die sich rechtwinklig zum Laserstrahl erstreckt und mit der Drehachse des Werkstückes zusammenfällt, verschiebbar ist, dadurch gekennzeichnet, dass die X- und Y-Positionen des auf einem Kreuzschlitten (3) angeordneten Spindelstockes (5) in einem Prozessor (68) gespeichert und verarbeitet werden, dass der Spindelstock (5), ausgehend von einer Ruhestellung, längs einer zur Drehachse senkrecht stehenden Achse (X) in eine Messausgangsstellung bewegt wird, dass die genannte Messausgangsstellung zum Bestimmen der Lage der Drehachse des Spindelstockes zum streifenförmigen Laserstrahl im Arbeitsspeicher des Prozessors (68) gespeichert wird, dass danach das Werkstück längs der Drehachse (Y) des Spindelstockes (5) soweit verschoben wird, bis der streifenförmige Laserstrahl (8) vom Werkstück teilweise unterbrochen wird, dass diese Position des Werkstückes als Werkstücknullpunkt im Arbeitsspeicher des Prozessors gespeichert wird, dass danach das Werkstück (7) um seine Drehachse soweit gedreht wird, bis eine maximale Abdeckung des streifenförmigen Laserstrahls (8) festgestellt wird, wobei der Winkel, um den das Werkstück (7) bis zur maximalen Abdeckung gedreht worden ist, zusammen mit der Grösse des Abdeckungsbereiches und der Stellung des Spindelstockes längs der Drehachse (Y) und der senkrecht dazu stehenden Achse (X) gespeichert wird, dass durch das Weiterdrehen des Werkstückes (7) noch weitere maximale Abdeckungen des Laserstrahls festgestellt und die obgenannten, eine solche Abdeckung kennzeichnenden Daten gespeichert werden, dass nach dem Drehen des Werkstückes um 360° aus den gespeicherten kennzeichnenden Daten der maximale Istwert des Durchmessers des Werkstückes (7) berechnet, gespeichert und angezeigt wird, dass aus weiteren berechneten Durchmessern das Zentrum des Werkstückes berechnet und die Exzentrizität des berechneten Zentrums gegenüber der Drehachse des Werkstückes bestimmt und angezeigt wird, und dass danach das Werkstück um einen Betrag in der Y-Achse verschoben und der oben angegebene Messvorgang wiederholt wird.

2. Verfahren nach Anspruch 1, dadurch gekennzeichnet, dass aus den berechneten Durchmessern die Konizität des Werkstückes (7) berechnet wird.

3. Verfahren nach Anspruch 2, dadurch gekennzeichnet, dass aus den berechneten Durchmessern und Exzentrizitäten die Geometrie des Werkstückes in seiner Drehachse, die Geradheit, berechnet wird.

4. Verfahren nach Anspruch 3, dadurch gekennzeichnet, dass der berechnete Durchmesser, die Exzentrizität, die Konizität und die Geradheit eines jeden Werkstückes mit entsprechenden Sollwerten verglichen werden und die ausgemessenen Werkstücke in drei Gruppen eingeteilt werden, wobei die erste Gruppe jene Werkstücke umfasst, deren errechneten Werte zwischen einem zulässigen Minimalwert und einem zulässigen Maximalwert liegen, die zweite Gruppe jene Werkstücke umfasst, die den maximal zulässigen Wert des Durchmessers überschreiten und deshalb nachbearbeitbar sind, und die dritte Gruppe jene Werkstücke umfasst, deren Durchmesser kleiner sind als der zulässige minimale Wert, eine grössere Exzentrizität und/oder eine unzulässige Krümmung aufweisen als der zulässige Höchstwert und deshalb ausgeschieden werden müssen.

5. Einrichtung zum Durchführen des Verfahrens nach Patentanspruch 1, wobei der Spindelstock (5), der in seiner Spindelkopfdrehachse (Y) axial verschiebbar ist, eine Spannvorrichtung aufweist, und die streifenförmige Laser-Lichtschranke (4), sowie der Spindelstock (5) auf einer Tischplatte (1) angeordnet sind und die Drehachse (Y) des Spindelstockes (5) senkrecht zum Laserstrahl (8) steht, und wobei ein Prozessor (68) zum Steuern von Elektromotoren (24, 33), sowie eine Tasten und ein Anzeigefeld aufweisende Bedienungskonsole (69) vorhanden sind, dadurch gekennzeichnet, dass der auf dem Kreuzschlitten (3) angeordnete Spindelstock (5) in einer zu seiner Drehachse (Y) senkrechten Achse (X) verschiebbar ist, dass die Spannvorrichtung eine Spannzange (6) ist, dass zum Ermitteln der Polarkoordinaten von extremen Punkten des Werkstückes (7) die Drehachse der Spannzange (6) des Spindelstockes (5) senkrecht zum streifenförmigen Laserstrahl (8) angeordnet ist, dass der Spindelstock (5) zum Erfassen des Drehwinkels der Spannzange einen Drehgeber (53)

6

umfasst, dass mit dem Prozessor (68) zusammenwirkende Mittel (24, 26, 33, 34, 28, 35) zum Verschieben des Werkstückes (7) von der Ruhestellung in die Messausgangsstellung vorhanden sind, dass die Bedienungskonsole (69) numerische Tasten (81) zum Eingeben der Sollwerte des zu messenden Werkstückes und Funktionstasten (82) zum Erzeugen von Befehlssignalen zum Oeffnen und Schliessen der Spannzange (6) aufweist und dass der Prozessor (68) einen Programmspeicher für die Messprogramme und einen Arbeitsspeicher für die Sollwerte und für die gemessenen Ist-Werte umfasst und Komparatoren zum Vergleichen der Ist-Werte mit den Sollwerten aufweist, wobei die Sollwerte und die Ist-Werte des Werkstückes auf dem Anzeigefeld (80) anzeigbar sind.

6. Einrichtung nach Anspruch 5, dadurch gekennzeichnet, dass der Spindelstock (5) wenigstens einen pneumatischen Kurzhub-Zylinder (67) zum Oeffnen und Schliessen der genannten Spannzange (6) und ein durch den Prozessor (68) steuerbares Steuerventil (76) aufweist, das in eine Zuführleitung (75) für Druckluft eingesetzt ist, und dass ein Druckwächter (78) zum Abgeben eines Signals an den Prozessor (68), wenn der Druck der Druckluft in der Zuführleitung (75) einen Sollwert unterschreitet, vorhanden ist.

7. Einrichtung nach Anspruch 5 oder 6, dadurch gekennzeichnet, dass die Bedienungskonsole eine Starttaste (92) zum Einleiten des eingestellten Messprogrammes aufweist und ein Fussschalter (11) ebenfalls zum Einleiten des eingestellten Messprogrammes vorhanden ist.

8. Einrichtung nach einem der Ansprüche 5 bis 7, dadurch gekennzeichnet, dass der Prozessor (68) eine Datentransferstelle (93) zum Verbinden des Arbeitsspeichers des Prozessors (68) mit einem Drucker aufweist.

## Claims

1. Method for contactlessly guaging the dimensions of a workpiece by means of a strip-shaped laser beam and a headstock which is axially displaceable with respect to the axis of rotation of the headstock, said axis extending at a right angle to the laser beam and coinciding with the axis of rotation of the workpiece, characterized in that the X and Y positions of the headstock (5) mounted on a cross-slide (3) are stored and processed in a processor (68), in that the headstock (5), starting from a position of rest, is displaced along an axis (X) which is vertical to the axis of rotation, into a guaging commencement position, in that said guaging commencement position is stored in the working memory of the processor (68) to determine the position of the axis of rotation of the headstock with respect to the strip-shaped laser beam, in that the workpiece is subsequently displaced along the axis of rotation (Y) of the headstock (5) until the strip-shaped laser beam (8) is partially interrupted by the workpiece, in that this position of the workpiece is stored in the working memory of the processor as the workpiece zero point, in that the workpiece (7) is subsequently rotated around its axis of rotation until a maximum coverage by the strip-shaped laser beam (8) is established, and the angle around which the workpiece (7) has been rotated to achieve maximum coverage is stored, together with the size of the area of coverage and the position of the headstock along the axis of rotation (Y) and of the axis (X) which is vertical thereto, in that further positions of maximum coverage by the laser beam are established by continued rotation of the workpiece (7), and the above-mentioned data characterizing such coverage are stored, in that after the workpiece has been rotated by 360°, the maximum actual value of the diameter of the workpiece (7) is calculated from the stored characterizing data, stored and displayed, in that the centre of the workpiece is calculated from more calculated diameters, and the eccentricity of the calculated centre with respect to the axis of rotation of the workpiece is determined and displayed, and in that the workpiece is subsequently displaced by an amount along the Y axis, and the guaging process given above is repeated.

2. The method according to claim 1, characterized in that the taper of the workpiece (7) is calculated from the calculated diameters.

3. The method according to claim 2, characterized in that the geometry of the workpiece in its axis of rotation, the straightness, is calculated from the calculated diameters and eccentricities.

4. The method according to claim 3, characterized in that the calculated diameter, the eccentricity, the taper and the straightness of each workpiece are compared with corresponding nominal values and the workpieces of which the dimensions have been guaged are divided into three groups, the first group comprising workpieces whose calculated values lie between a permissible minimum value and a permissible maximum value, the second group comprising workpieces which exceed the maximum permitted value of the diameter and must therefore be machined further, and the third group comprising workpieces whose diameters are smaller than the minimum permitted value, which have a greater eccentricity than the maximum permitted value and/or a curvature which is not permitted, and which must therefore be rejected.

5. Apparatus for carrying out the method according to claim 1, the headstock (5), which is axially displaceable along the axis of rotation of the headstock (Y) having a chucking device, and the strip-shaped laser light barrier (4) and the headstock (5) being mounted on a table base (1), and the axis of rotation (Y) of the headstock (5) being vertical to the laser beam (8), and there being a processor (68) for controlling electromotors (24, 33), and an operating console (69) having keys and a display field, characterized in that the headstock (5) disposed on the cross-slide (3) is displaceable along an axis (X) which is vertical to its axis of rotation (Y), in that the chucking device is a spring chuck (6), in that to determine the polar coordinates of extreme points of the workpiece (7), the axis of rotation of the spring chuck (6) of the spindle head (5) is disposed vertically to the strip-shaped laser beam (8), in that the headstock (5) comprises a shaft encoder (53) to determine the angle of rotation of the spring chuck, in that there are means (24, 26, 33, 34, 28, 35) which cooperate with the processor (68) to displace the workpiece (7) from the position of rest to the guaging commencement position, in that the operating console (69) has numeric keys (81) for inputting the nominal values of the workpiece to be measured and function keys (82) to generate command signals to open and close the spring chuck (6) and in that the processor (68) comprises a programme memory for the guaging programmes and a working memory for the nominal values and for the measured actual values and has comparators for comparing the actual values with the nominal values, the nominal values and the actual values of the workpiece being displayable in the display field (80).

6. Apparatus according to claim 5, characterized in that the headstock (5) has at least one pneumatic short-stroke cylinder (67) for opening and closing the said spring chuck (6) and a control valve (76) controllable by the processor (68), said valve being used in a compressed air supply pipe (75), and in that there is a pressure monitor (78) to issue a signal to the processor (68) if the pressure of the compressed air in the supply pipe (75) falls below a nominal value.

7. Apparatus according to claim 5 or 6, characterized in that the operating console has a start key (92) to start the selected guaging programme, and a foot switch (11), also for starting the selected guaging programme.

8. Apparatus according to one of claims 5 to 7, characterized in that the processor (68) has a data transfer point (93) to connect the working memory of the processor (68) with a printer.

## Revendications

1. Procédé pour la mesure sans mise en contact d'une pièce à usiner au moyen d'un faisceau laser en forme de bande et d'une poupée à broche qui est axialement déplaçable par rapport à l'axe de rotation de la poupée à broche, qui s'étend perpendiculairement au faisceau laser et qui coïncide avec l'axe de la pièce à usiner, caractérisé en ce que les positions X et Y de la poupée à broche (5) montée sur un chariot à deux mouvements croisés (3), sont emmagasinées et traitées dans un processeur (68), en ce que la poupée à broche (5) est, à partir d'une position de repos, déplacée le long de l'axe (X) qui est perpendiculaire à l'axe de rotation pour parvenir dans une position de départ de mesure, en ce que cette position de départ de mesure est emmagasinée dans la mémoire de travail du processeur (68) pour déterminer la position de l'axe de rotation de la poupée à broche par rapport au faisceau laser en forme de bande, en ce que la pièce à usiner est subséquemment déplacée le long de l'axe de rotation (Y) de la poupée à broche (5) jusqu'à ce que le faisceau laser en forme de bande (8) soit partiellement interrompu par la pièce à usiner, en ce que cette position de la pièce à usiner est emmagasinée dans la mémoire de travail du processeur en tant que point zéro de la pièce à usiner, en ce qu'ensuite la pièce à usiner (7) est mue en rotation autour de son axe de rotation jusqu'à ce qu'une couverture maximale du faisceau laser en forme de bande (8) soit constatée, l'angle dont la pièce à usiner (7) a été tournée jusqu'à la couverture maximale, de même que la grandeur du domaine de couverture et que la position de la poupée à broche le long de l'axe de rotation (Y) et le long de l'axe (X) qui lui est perpendiculaire, étant emmagasinés, en ce que, par une rotation poussée plus loin de la pièce à usiner (7), d'autres positions de couverture maximale du faisceau laser sont établies, des données correspondant à ces couvertures étant emmagasinées, en ce que, après rotation de 360° de la pièce à usiner, la valeur effective du diamètre de la pièce à usiner (7) est calculée sur la base des données emmagasinées, la valeur de ce diamètre étant également emmagasinée et affichée, en ce que, sur la base d'autres diamètres calculés, le centre de la pièce à usiner est calculé et l'excentricité du centre calculé par rapport à l'axe de rotation de la pièce à usiner est établi et affiché, et en ce que la pièce à usiner est ensuite déplacée d'une certaine distance le long de l'axe Y et le processus de mesure énoncé ci-dessus est répété.

2. Procédé selon la revendication 1, caractérisé en ce que la conicité de la pièce à usiner (7) est calculée sur la base des diamètres calculés.

3. Procédé selon la revendication 2, caractérisé en ce que la géométrie de la pièce à usiner sur son axe de rotation, la rectitude, est calculée sur la base des diamètres et excentricités calculés.

4. Procédé selon la revendication 3, caractérisé en ce que le diamètre, l'excentricité, la conicité et la rectitude de chaque pièce à usiner sont comparés avec des valeurs de consigne correspondantes, et les pièces ainsi jaugées sont réparties en trois groupes, le premier groupe comprenant toutes les pièces à usiner dont les valeurs calculées se situent entre une valeur minimale admissible et une valeur maximale admissible, le deuxième groupe comprenant toutes les pièces dont le diamètre dépasse la valeur maximale admissible et qui ainsi pourront être retravaillées, et le troisième groupe comprenant les pièces dont les diamètres sont plus petits que la valeur minimale admissible, les pièces qui présentent une excentricité plus grande et/ou une déficience de rectitude plus grande que les valeurs maximales admissibles, ces pièces du troisième groupe devant ainsi être éliminées.

5. Dispositif pour la mise en oeuvre du procédé selon la revendication 1, dans lequel la poupée à broche (5), qui est déplaçable axialement selon son axe de rotation (Y), présente un agencement de serrage, dans lequel l'appareillage à faisceau lumineux laser en forme de bande (4), de même que la poupée à broche (5), sont disposés sur une table de base (1), l'axe de rotation (Y) de la poupée à broche (5) étant perpendiculaire au faisceau laser (8), et dans lequel existe encore un processeur (68) pour la commande de moteurs électriques (24, 33), de même qu'une console de service présentant des touches et un champ d'affichage, caractérisé en ce que la poupée à broche (5), disposée sur le chariot à mouvements croisés (3), est déplaçable le long d'un axe (X) qui est perpendiculaire à son axe de rotation (Y), en ce que l'agencement de serrage est une pince de serrage (6), en ce que, pour l'obtention des coordonnées polaires des points extrêmes de la pièce à usiner (7), l'axe de rotation de la pince de serrage (6) de la poupée à broche (5) est disposé perpendiculairement à la forme de bande du faisceau laser (8), en ce que la poupée à broche (5) comprend un donneur d'information de rotation (53) pour la saisie de l'angle de rotation de la pince de serrage, en ce que des moyens (24, 26, 33, 34, 28, 35) coopérant avec le processeur (68) sont établis pour le déplacement de la pièce à usiner (7) depuis la position de repos jusqu'à la position de départ de mesure, en ce que la console de service (69) présente des touches numériques (81) pour l'introduction de valeur de consigne concernant la pièce à mesurer et des touches fonctionnelles (82) pour engendrer des signaux de commande pour l'ouverture et la fermeture de la pince de serrage (6), et en ce que le processeur (68) englobe un mémorisateur de programme pour le programme de mesure et un mémorisateur de travail pour les valeurs de consigne et pour les valeurs réelles mesurées, ce processeur comprenant aussi des comparateurs pour la comparaison des valeurs réelles et des valeurs de consigne, les valeurs de consigne et les valeurs réelles de la pièce à usiner étant affichables dans le champ d'affichage (80).

6. Dispositif selon la revendication 5, caractérisé en ce que la poupée à broche (5) présente au moins un cylindre pneumatique à course courte (67) pour l'ouverture et la fermeture de la dite pince de serrage (6) et une vanne de commande (76) pouvant être commandée par le processeur (68), ce cylindre étant raccordé à une conduite (75) d'amenée d'air comprimé, et en ce qu'un moniteur de pression (789 est agencé pour délivrer un signal au processeur (68) lorsque la pression de l'air comprimé dans la conduite d'amenée (75) descend en-dessous d'une valeur de consigne.

7. Dispositif selon la revendication 5 ou 6, caractérisé en ce que la console de service présente une touche de démarrage (92) pour engager le programme de mesure établi, un commutateur à pied (1) étant également agencé pour l'engagement du programme de mesure établi.

8. Dispositif selon l'une des revendications 5 à 7, caractérisé en ce que le processeur (68) présente un endroit de transfert de données (93) pour relier le mémorisateur de travail du processeur (68) avec une imprimante.

FIG. 1

FIG. 3

FIG. 2

EP 0 346 288 B1

FIG. 4

13

FIG. 5

FIG. 6

EP 0 346 288 B1